# EUROPEAN PATENT APPLICATION

(11) **EP 1 002 462 A2**
(43) Date of publication of application: **24.05.2000**
(21) Application number: 99122927.9
(22) Date of filing: 18.11.1999
(51) Int. Cl.: A01M 1/20, A01G 13/10

(54) **Device for catching snails and means for use in such a device**

(30) Priority: 18.11.1998 DK 151098
(71) Applicant: DANSK TEKNOLOGISK INSTITUT, 8000 Aarhus C (DK)
(72) Inventor: Jakobsen, Henning Sejer, 8362 Horning (DK); Lauridsen, Peter, 8240 Risskov (DK)
(74) Representative: Nielsen, Leif

(57) **Abstract**

The invention concerns means for catching snails (4), preferably so-called killer snails (4). The means comprises forming a hollow between sides which are formed by plates (2). The plates are at least one outer side provided with hair- or scale-like barbs. Over the assembled sides there is placed a corresponding closed surface which on at least the inner side correspondingly is provided with hair- or scale-like barbs. Between the two surfaces is formed a passage allowing the snails to pass in one direction but hermetically closes off the passage of the snail in the other direction. The snails are lured into the passage via a bait placed in the centre of the trap. The bait comprises particles, e.g. liposomes having an outer shell made of a material which is resistant to the weather and attractive to snails, together with a core which is narcotising or killing snails.

## Description

The present invention relates to a device for catching snails. The device comprises an arrangement of barbs. In a peculiar embodiment the device comprises a trap with a hollow between sides formed by one or more surfaces where the movement of snails is controlled by the barb arrangement.

A large number of different traps, baits and killing methods for catching and killing snails, especially so-called killer snails of the species Arion Lusitanicus, are known. The traps either utilises the feature that the snail seek shelter in dark and humid locations as the snails are night-active animals or the feature that the snails are attracted by strongly smelling objects, like decaying plants, fruits or animals.

The traps may either be of the fall trap kind where the snail fall into a hollow wherefrom they cannot come up again or of the kind where in the trap there is placed a material or a product which is attractive to the snails but which is deadly to the snails.

The baits may be the previously mentioned strongly smelling objects which may be provided with materials which are poisonous, detrimental or in other ways deadly to the snails. The killing methods may either be materials or products which are deadly to the snails, or be electric or mechanical killing methods.

Common to known traps, means and methods are that they technically or in application are very complicated so that private consumers' incentive to use the various traps, means and methods is very small.

It is the purpose of the present invention to indicate a device making it possible to produce a simple and effective trap and which is easy for a private consumer to set up and use, together with a means for using in such a trap.

According to the invention this is achieved with a device having the features indicated in claim 1 and with a means as defined in claim 10.

The device according to the invention is technically simple to make as the baits can be made as integral elements on plates. The trap itself is easy to set up as such plates are used for building up the device or as separate elements which are fastened on the plates.

The barbs may be hair- or scale-like material. A particularly effective trap my be formed of two plates forming an interspace where the barbs are placed for creating a lock effect The barbs only allow passage in one direction and close effectively the interspace when they are raised at attempts of passing in the opposite direction. Because of the elastic flexibility the barbs will thus yield and be pressed against the base by passing in the said one direction. When attempting passage the barbs will yield and be raised which prevents passage in the opposite direction. The barbs are placed under an acute angle in relation to the base with orientation in the direction where passage is possible. Therefore, because of the elastic flexibility they will only yield and be pressed against the base when passing in the one direction.

Advantageous embodiments for the device according to the invention is described in claims 2-9.

Along the sides, the plates may be assembled in any optional way. The plates may be assembled with tape, clips, Velcro tape or other external means for mechanical joining the plates. Alternatively, the plates may be provided along the sides with means in the shape of hooks, hinges or other integrated means for joining the sides of the plates.

The means according to the invention has the features indicated in claim 10. It consists of small particles which the snails eat and which contain materials being detrimental to the snails. If the particles consist of liposomes, these comprise an outer shell formed of lipids. The lipids in the shell are formed of a material preferably being attractive to the snails, at least not being repulsive to the snails, and which at the same time has sufficient stability to the weather. The material that the outer shell should be formed of is vegetable starch, like maize starch, or wax, possibly added with scents and/or flavourings, or other natural products.

The shell has a thickness so that the shell form a sufficiently resistant exterior of the particles with respect to strength and resistance to outside weather, but also so that the shell has a sufficiently small thickness in order that the shell may be broken down chemically by the inner of the snail or mechanically by the tooth organ of the snail. Thereby it is ensured that the material or product constituting the core may come into contact with the inner of the snail after the snail has eaten the particles. If the particles are not liposomes, the particles will preferably be contained in e.g. a gelatine mass. If the particles are liposomes, the shell on the liposomes will initially have sufficient stability against the weather but may also, like other particles, be contained in e.g. a gelatine mass.

The liposomes also comprise an inner core formed by a material or a product which destroys the inner of the snail, either by a chemical or physical decomposition of the snail or by a mechanical destruction of the snail. The materials or products in the core of the liposomes comes into contact with the inner of the snail after the snail has eaten the liposomes and the small tooth organs possessed by the throat of the snail have grated off the outer shell the liposomes. Then the core of the liposomes will be free and be able to destroy the stomach of the snail.

The materials or products which the inner core is formed of and which destroys the snail chemically or physically, are vitamin A, chitinase, chalk, aluminium, complex metal binders, acetyl choline and other materials known to break down organisms like the inner of a snail, like an organism as the human stomach. Materials or products that the inner core also may be formed of and which destroys the snail mechanically are hair, metal shavings and other fibrous materials. Alternatively, it may be sharp or pointed, granulated materials like broken glass.

The core is preferably formed of a foamed material or other material with a moisture absorbing capability and which will dehydrate the snail. It may be a synthetic sponge, pressed sphagnum or small pellets of copper sulphate. The material has a texture so that the snail can move around in the material. As mentioned, the material forming the core has hydrophilic qualities so that the snails become dehydrated when the move around in the material. Alternatively, the material may be filled with a material which destroys the snails chemically, physically or mechanically, e.g. a mucous loosening agent like acetyl choline.

If the shell as well as the core are formed of a biologically decomposable material, it will be possible to compost the body when it has destroyed a sufficient number of snails. Shell, core as well as snails will thereby become part of the circulation of the nature in a natural way.

The invention will then be described in more detail with reference to the accompanying schematic drawing, where
- Fig. 1: shows a plate member for building up a trap with a barb arrangement according to the invention for rectifying the movement of the snails,
- Fig. 2: shows drafts of embodiments of traps with devices according to the invention,
- Fig. 3: shows a second embodiment of a plate member corresponding to Fig. 1,
- Fig. 4: a perspective view of a trap with one side omitted, built up from the plate members shown in Fig. 3,
- Figs. 5-6: show further embodiments of plate members for a trap,
- Fig. 7: shows a further embodiment of a trap with one side omitted, built up from the plate members shown in Fig. 4,
- Fig. 8: shows a perspective view of a further embodiment of a trap with curved surfaces and with cover for night shelter for the snails, and
- Fig. 9: shows a section through the trap shown in Fig. 8.

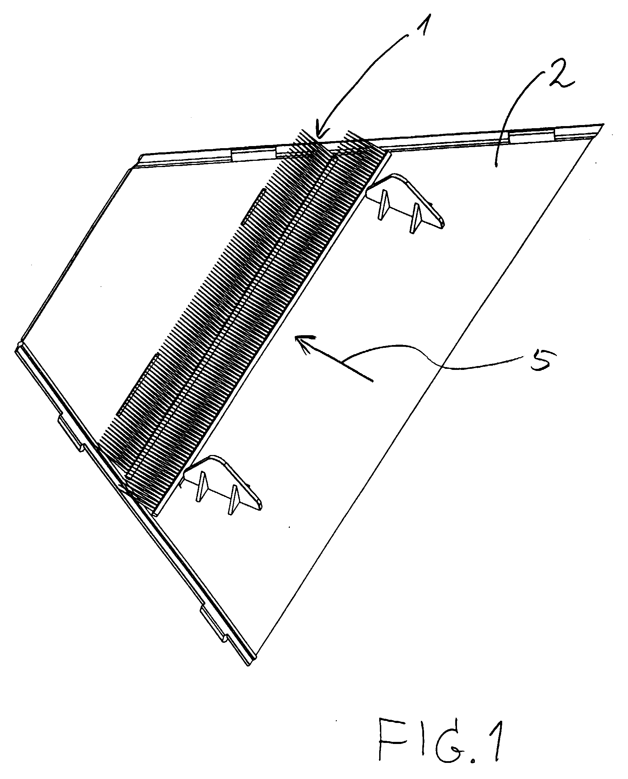

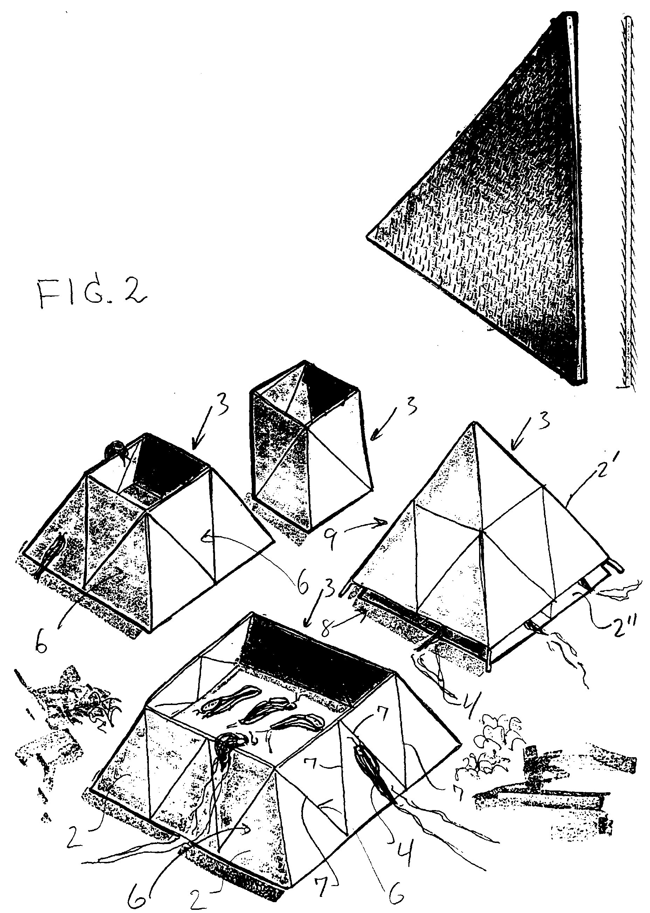

Fig. 1 shows the special barb arrangement 1 which by placing on surface parts 2 of a trap 3 (see Fig. 2) ensures that the movement of the snails 4 is guided in one direction 5. The barbs function trough their mechanical and designed ability of bending when a snail is moving along with the barbs. On the contrary, the barbs are raised when the snails move against the barbs, and a barrier of many pointed barbs appears.

The barbs will be double-acting in a preferred embodiment where there will be barbs on upper plate members 2' and on lower plate members 2'' of the trap 3, as shown in Fig 2, where the disposal of the barbs on the upper and lower plate member is arranged so that the barbs together completely shuts off movements against the barbs, whereas it is possible to move with the barbs in the direction 5 because of the elastic flexibility of the barbs.

Fig. 2 shows a first embodiment of a trap for catching snails. The snails are lured into the trap, whereafter they may be killed with a material which is deadly for the snails, or the snails may be collected in a bag or the like placed at the bottom of the hollow. The trap consists of a hollow formed between sides 6 of the hollow. The sides consist of a number of plates 2',2'' joined along edges 7 of plates 2 for forming the sides. The sides may have different shapes and may be formed of one or more plate members or plates. In the embodiment shown the sides are formed of at least isosceles triangular plates. Thereby it is possible to form hollows with different sizes and depths. The hollow is preferably partly filled with a means attracting the snails, like beer, decaying apples, cabbage, onions, etc.

At each side the plates are provided with an arrangement of barbs as shown in Fig. 1. The scales or hairs extend in direction upwards or downwards towards the base line of the triangle. At two opposite side of the plate, the scales or hairs are oppositely directed. The scales or hairs may be made of plastic or other material being resistant to the weather. As an alternative to the plates there is used plates with another design and where either both sides or only one side are/is provided with a material formed as scale or hair extending in the same direction.

When the plates are joined for forming the sides around the hollow, the scales or hairs at the outer side have to be directed upwards from the bottom of the plates and toward the top of the hollow. If the plates are provided with scales or hair at the inner side of the plates as in the shown embodiment the scales or hairs at the inner side will be directed downwards from the top of the hollow toward the bottom of the hollow.

Snails will be able to crawl along the sides in the same direction that the scales or hairs are directed. The snails will, however, not be able to or at least have difficulty in crawling along the sides in direction opposite to the scales or hairs. Because of the bait in the hollow, the snails will be attracted to the hollow, crawl up along the outer side of the plates and then crawl down along the inner side of the plates, or, if the sides form a frustum of a pyramid, fall down into the hollow.

When the snails are in the hollow they will not be able to crawl out of the hollow again as this will require the snails to crawl in direction opposite to scales or hair which they as mentioned cannot do, or at least have difficulty with. For embodiments where the inner sides form an acute angle with the bottom of the hollow, it will not be possible for the snails to crawl out of the hollow because of the gravitational force.

The advantage of forming the sides around the hollow by means of at least isosceles triangular plates is that it is possible by means of such plates for toxin hollows with different form, size and depth. From a given number of plates there may either be formed several small or lesser hollows or there may be form one large hollow, possibly a hollow with covering, for further attracting the snails with darkness. If such a covering is formed it will be possible to use this covering for further preventing the snails from getting out of the trap. By providing the covering at a suitable distance from the plate below, e.g. at a distance of between 0.5 and 5 cm, the hairs or scales will not hinder movement in direction of the scales. The hairs or scales will have tendency to be lifted when the snail tries to crawl the opposite direction of the one that the hairs or scales are directed in. Thereby the hairs or scales will extend between the plate and the covering and thus form a barrier between the plate and the covering and entirely prevent the snail form crawling back.

As an alternative to the plates under the covering or as a supplement to the plates below the covering, the covering itself may be provided with a hair- or scale-like material at the underside, acting instead of or cooperating with hair- or scale-like material on the plates forming the sides of the hollow.

The special feature of the plates 2 is that they are all identical, and by joining the identical plates a desired shape of an inner part 8 and an outer part 9 of the trap 3 appears.

The plates may be joined along the sides in any optional way. The plates may be assembled with tape, clips, Velcro tape or other external means for mechanical joining the plates. Alternatively, the plates may be provided along the sides with means in the shape of hooks, hinges or other integrated means for joining the sides of the plates.

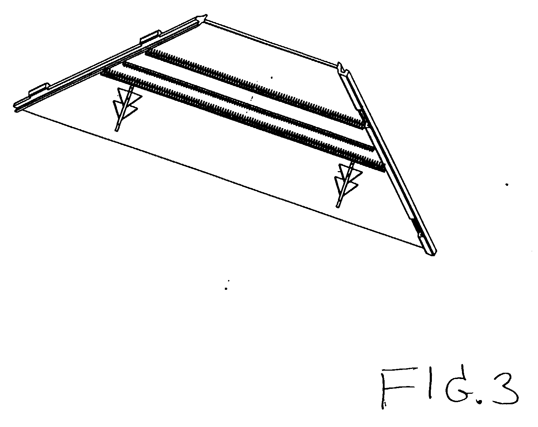

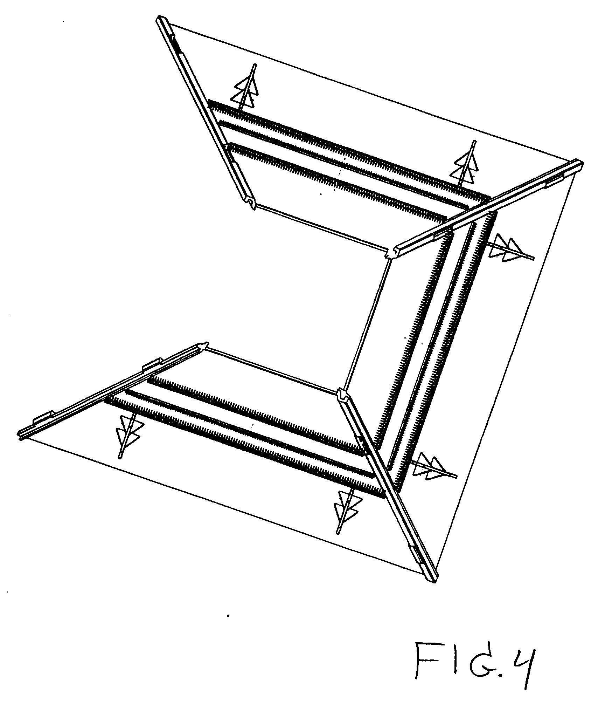

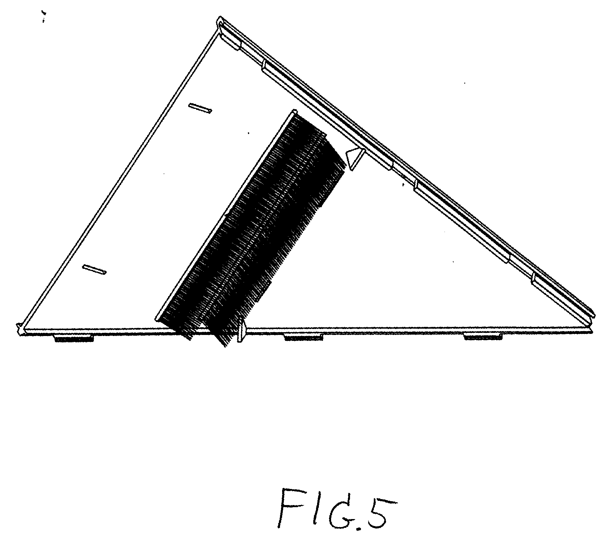

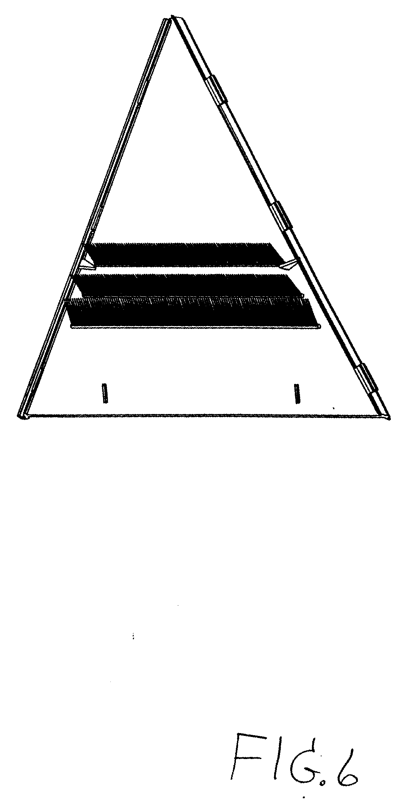

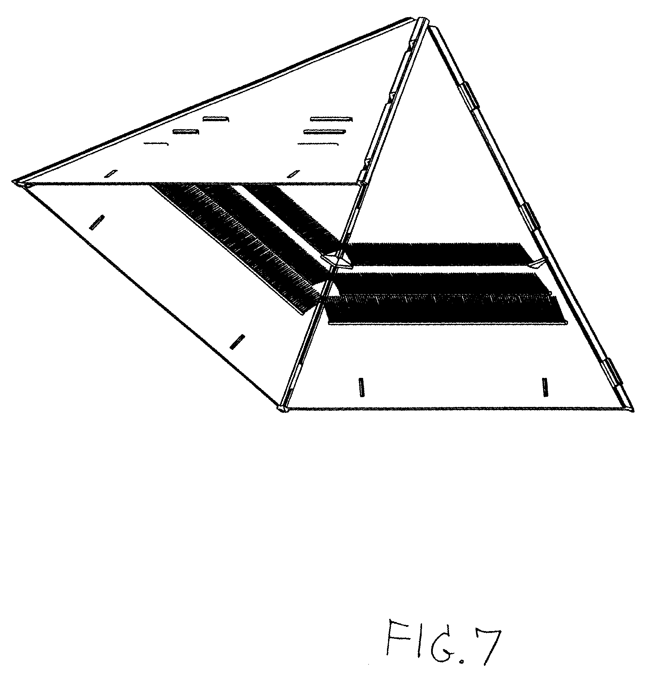

Besides forming cylindric and frusto-pyramidal hollows, the plates may also be joined in such a way that there is formed a plane with a hole at the centre. It is then necessary to establish a trapping possibility, like a hole digged into the earth immediately under the hole in the plane, or a killing possibility like liposomes. Furthermore, the plates can be assembled so that a frusto-conical hollow is formed. The two latter possibilities of assembling the plates are most suited if the plates are trapezoidal as illustrated in Figs. 1, 3 and 4 instead of triangular as shown in Figs. 2, 5, 6 and 7.

Figs. 2, 4 and 7 show the trap in embodiments where the surfaces are assembled to whole surfaces which by joining form a pyramidal trap. The trap consists of four identical sides for the inner part 8 and four identical parts for the outer part 9.

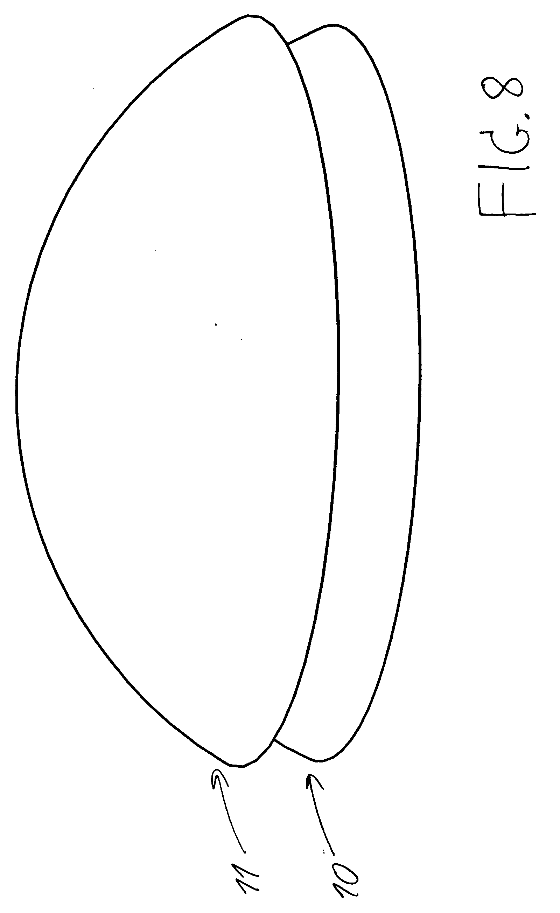

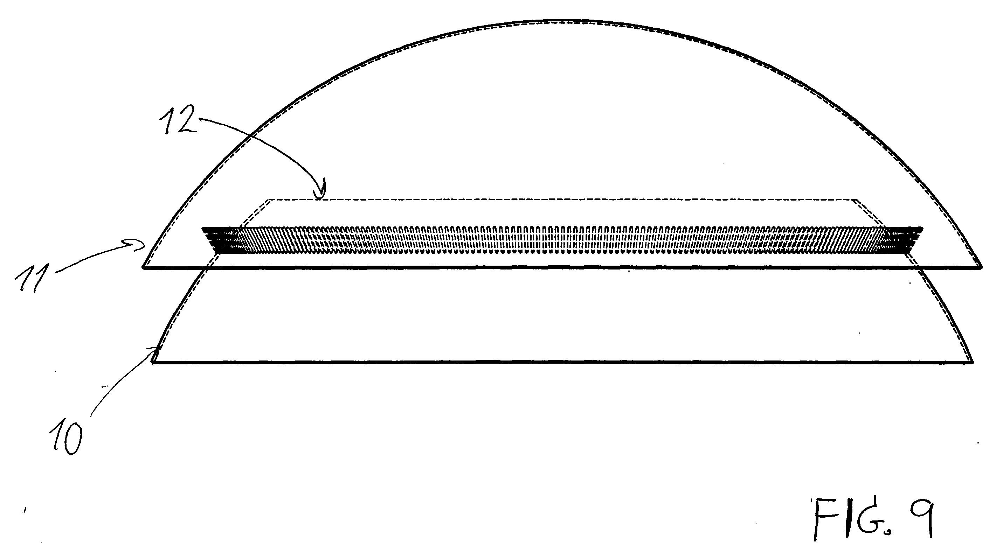

Figs. 8 and 9 illustrates a trap 3 built up from curved plates 10 and 11 to an inner and an outer part, respectively. The plates 10,11 are provided with a barb arrangement 1. This may be provided on one and/or both plates. The inner plate is annular around an opening 12 making possible the passing of the snails into the inner of the trap. The opening is covered by the outer plate 1 which forms a covering.

## Claims

1. Device for catching snails comprising an arrangement of barbs, **characterised** in that in that the barbs are elastically flexible so that they allow snails to pass in one direction as they are bent during passage of the snail and rise and appear pointed by moving in the opposite direction.

2. Device according to claim 1, **characterised** in that it comprises a hollow between sides formed by a number of plates provided with barbs in the shape of hair-or scale-like material at at least one outer side of the plates, and that the hair- or scale-like material is directed in the same direction from a bottom of the outer side to a top of the outer side.

3. Device according to claim 2, **characterised** in that the plates has the shape of at least isosceles triangles, that a first side of the plates is provided with hair- or scale-like material directed from a bottom line of the triangle and towards an opposite point of the triangle, and that a second side of the plates is provided with a hair- or scale-like material directed in a direction from a point of the triangle towards an opposite bottom line of the triangle.

4. Device according to claim 2, **characterised** in that a number of plates are mutually disposed and held firmly so that one of the isosceles sides of a plate abut on one of the isosceles side of an adjacent plate, that the base line of the triangle of some juxtaposed plates is alternately turned upwards and downwards, and that the base line of the triangle of other juxtaposed plates are both turned upwards or downwards in order to form a frusto-pyramidal hollow.

5. Device according to claim 2, **characterised** in that a number of plates are mutually disposed and held firmly so that one of the isosceles sides of a plate abuts on one the isosceles sides of an adjacent plate, where the sides of the surfaces are designed in such a way that they only may be assembled so that the hair- or scale-like material is always directed in the same direction.

6. Device according to claims 2-5, **characterised** in that the surfaces may be put together as a top section which may be placed upon a lower section, so that it appears as a lid with hair- or scale-like material directed opposite to the lower section.

7. Device according to claim 6, **characterised** in that the lower part and the top together form an interspace allowing a possibility of passage for the snails in one direction, but hermetically closing the passage for the snails in the other direction.

8. Device according to claim 5-7, **characterised** in that the surface consist of whole surfaces with attached barbs for forming an inner section and a top section with oppositely directed barbs.

9. Device according to claim 5-7, **characterised** in that the surfaces consist of an inner section and an outer section, respectively, which are approximately circular and hemispherically shaped, whereon the barbs are attached on the outer surface of the inner section and the inner surface of the top section for achieving an interspace for passage in a direction between the two surfaces.

10. A means for attracting, narcotising or killing snails for placing in the trap, which means comprises a number of particles with a diameter of preferably 50 µm to 2 mm, **characterised** in that the particles comprises a shell formed of a material being resistant against outside weather and which is attractive to snails, such as gelatine or starch, and a core formed of a material which is destructive to the inner of a snail, such as calcium carbonate, vitamin A, chitinase, hair, salt chalk; aluminium, complex metal binders and acetyl choline.
